# EUROPEAN PATENT APPLICATION

(11) **EP 2 341 198 A2**
(43) Date of publication of application: **06.07.2011**
(21) Application number: 10195111.9
(22) Date of filing: 15.12.2010
(51) Int. Cl.: E04G 15/06

(54) **Modular inlet sleeve**

(30) Priority: 31.12.2009 FI 20096418
(71) Applicant: ABB Oy, 06100 Porvoo (FI)
(72) Inventor: Didriksson, Lars, 06100, Porvoo (FI)
(74) Representative: LEITZINGER OY

(57) **Abstract**

The object of the invention is an inlet sleeve arrangement for constructing a structure in a cast-in-place process by using material, which becomes harder. The inlet sleeve arrangement comprises features of modular expandability so arranged that the arrangement comprises at least two inlet sleeves comprising at least one inlet opening (100) in each inlet sleeve for inletting at least one cable through said constructed structure. The at least two inlet sleeves comprises first compatible locking means (102, 104) to accomplish horizontal locking between the inlet sleeves, and second compatible locking means (103, 105, 107, 109) to accomplish vertical locking between the inlet sleeves. Said compatible locking means (102, 104, 103, 105, 107, 109) are so arranged between the inlet sleeves that the inlet sleeve arrangement has modular expandability to comprise desired amount of same size or of different size of inlet sleeves by locking them fastened by said first and second locking means to form an integrated building module of the inlet sleeves for performing the cast-in-place process.

## Description

### The field of the invention

Cast-in-place processes of for example cement or concrete are performed in different kind of building needs, where it is important to accomplish practical inlet arrangements for electrical and telecommunication wires.

### State of the art

When cast-in-place of concrete is used for example in building of a wall structure, each inlet sleeve for inletting one or more wire(s) is fixed separately typically by nailing each four corners of each inlet sleeve. Especially when in same cast-in-place process is a need to fix several inlet sleeves, the prior art fixing method requires much work and is time-consuming.

### Brief description of the invention

The object of the invention is to accomplish such an inlet sleeve arrangement for the purposes of cast-in-place process, which arrangement makes assembling of especially several inlet sleeves fast and practical in a same cast-in-place situation. This will be achieved by an inlet sleeve arrangement for constructing a structure in a cast-in-place process by using material, which becomes harder, which inlet sleeve arrangement comprises at least two inlet sleeves comprising at least one inlet opening in each inlet sleeve for inletting at least one cable through said constructed structure. The inlet sleeve arrangement comprises features of modular expandability so arranged, that at least two inlet sleeves comprises as first compatible locking means at least on one side of said inlet sleeves a locking protruding part and at least one locking groove, and a distance between the locking protruding part and the locking groove is compatible to the correspondent locking means of the other inlet sleeve to accomplish horizontal locking between the inlet sleeves, and as second compatible locking means at least two reverse wedge-shaped protruding parts and locking hollows, distance of which is compatible with corresponding compatible locking means of the other inlet sleeve to accomplish vertical locking between the inlet sleeves, and each inlet sleeve comprises at least on its one same side arranged said first locking means and second locking means for modular expandability of the inlet sleeve arrangement to comprise desired amount of same size or of different size of inlet sleeves by locking them fastened by said first and second locking means to form an integrated building module of the inlet sleeves for performing the cast-in-place process.

The invention is based on that compatible locking means are accomplished to inlet sleeves to form both horizontal and vertical locking between the inlet sleeves so that the inlet sleeve arrangement has modular expandability comprising a desired amount of same size or different size inlet sleeves by interlocking them to form an integrated building module of the inlet sleeves in cast-in-place process.

The benefit of the invention is that an integrated building module can be formed to be utilized for example in cast-in-place situation of cement, which building module has a modular expandability of same size or of different size inlet sleeves, which can be interlocked thus minimizing for example nailing needs even down to 50 % as compared to prior art embodiment.

### List of the figures

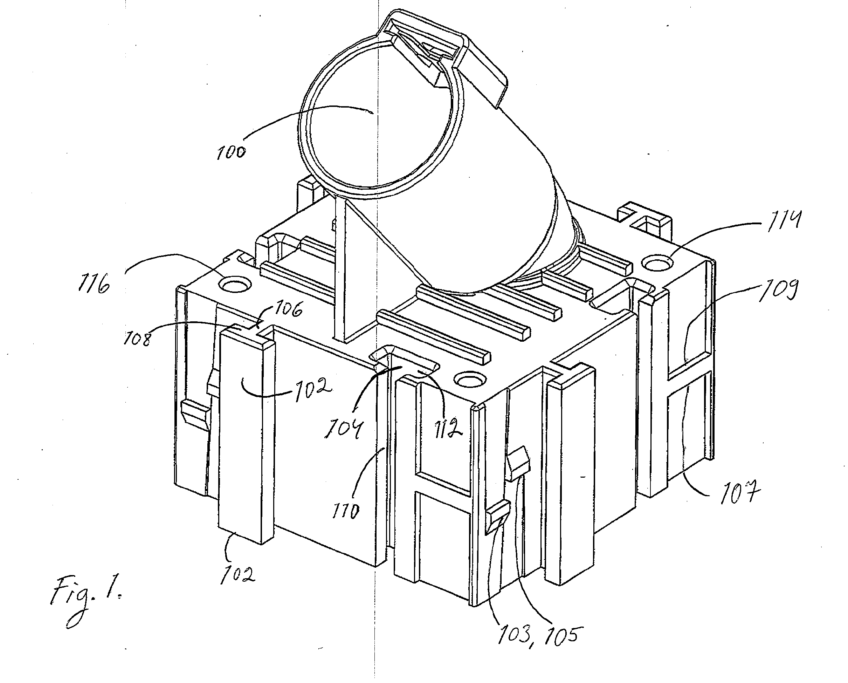

Figure 1 presents a single inlet sleeve according to a preferred embodiment of the invention.
Figure 2 presents an inlet sleeve arrangement according to the preferred embodiment of the invention, the arrangement comprising interlocking inlet sleeves of different sizes forming an integrated structure.
Figure 3 presents an inlet sleeve arrangement according to the preferred embodiment of the invention, the arrangement being expanded to two different directions by interlocking the inlet sleeves.

### Detailed description of the invention

The inlet sleeve arrangement of the invention is focused to provide a much more enhanced embodiment than the prior art embodiment to be utilized in building and renovation works, where cast-in-place of concrete or similar material is processed to form a structure, for example a wall structure, of material, which becomes harder in said process.

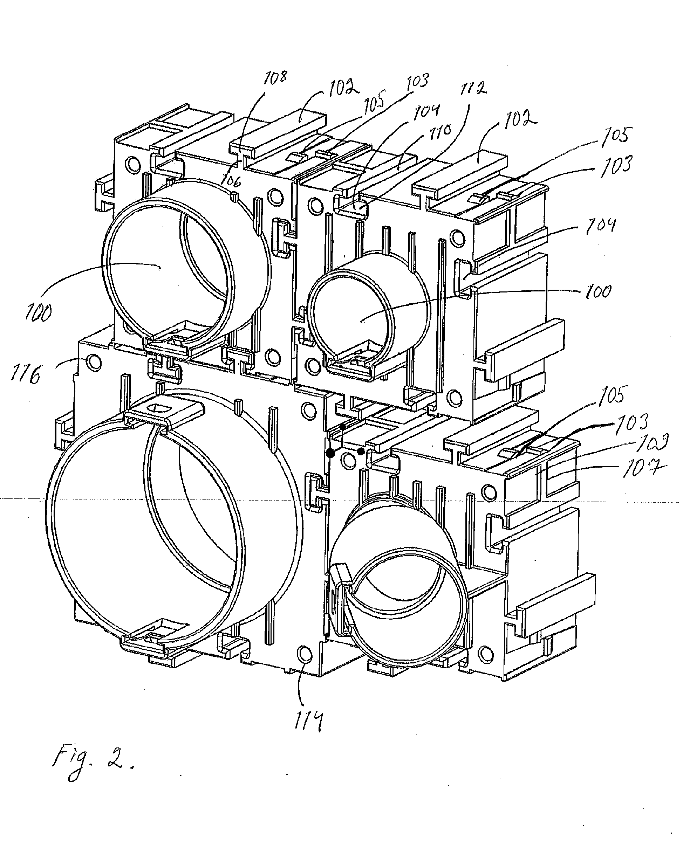

In figure 2 is presented a single inlet sleeve according to the preferred embodiment of the invention, the inlet sleeve comprising an inlet opening 100 for inletting at least one cable through the wall structure, and locking means 102, 104, 103, 105, 107, 109 for locking the inlet sleeve fastened with one or more other inlet sleeve(s), said locking means being modular compatible between the inlet sleeves. In figure 2 is presented an inlet sleeve arrangement according to the preferred embodiment of the invention, which arrangement comprises interlocking inlet sleeves of different sizes, the interlocking being accomplished by the locking means 102, 104, 103, 105, 107, 109 to form an integrated building module to be utilized in the cast-in-process of the concrete. Said modular compatible locking means 102, 104, 103, 105, 107, 109 are arranged between the inlet sleeves for modular expandability of the inlet sleeve arrangement to comprise desired amount of same size or of different size of inlet sleeves by locking them fastened, as in figure 2 is presented, for inletting cables through the wall structure of the cast-in-place process.

The first inlet sleeve according to the preferred embodiment of the invention comprises as first compatible locking means at least one protruding locking overhang 102, which comprises a narrow lowest part 106 and as compared to the lowest part a substantially wide upper part 108. The second inlet sleeve comprises as first compatible locking means with said locking overhang a locking groove 104, which comprises a narrow lowest part 106 and as compared to the lowest part a substantially wide upper part 108, and said locking overhang 102 is attachable into said locking groove to accomplish horizontal locking in comparison with the inlet opening 100 between the first and second inlet sleeve.

The first inlet sleeve according to the preferred embodiment of the invention comprises also as second compatible locking means at least two reverse wedge-shaped protruding part 103, 105. The second inlet sleeve comprises locking hollows 107, 109 as second compatible locking means with said reverse wedge-shaped protruding parts 103, 105 to fasten said wedge-shaped protruding parts 103, 105 into said hollows 107, 109 to accomplish vertical locking in view of the inlet opening 100 between the first and second inlet sleeve. Each inlet sleeve comprises preferably at least on one of its side both the first locking means 102, 104 and the second locking means 103, 105, 107, 109.

Each inlet sleeve comprises on one or more or on each side of them at least one locking overhang 102 and at least one locking groove 104, and the distance between them is compatible with corresponding compatible locking overhang 102 and locking groove 104 of the other inlet sleeve to accomplish modular expandability of the inlet sleeve arrangement. Furthermore each inlet sleeve comprises on one or more or on each side of them at least two reverse wedge-shaped protruding parts 103, 105 and locking hollows 107, 109, and the distance between them is compatible with corresponding compatible locking means 103, 105, 107, 109 of the other inlet sleeve to accomplish modular expandability of the inlet sleeve arrangement.

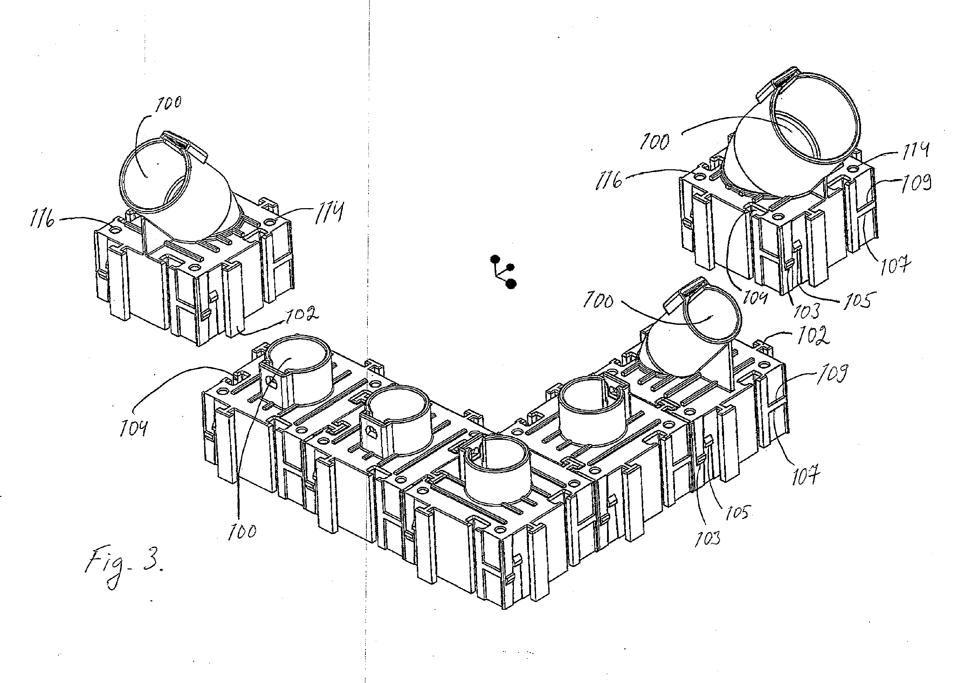

In figure 3 is presented an inlet sleeve arrangement according to the preferred embodiment of the invention, the arrangement being expanded to two different directions by modular interlocking of the inlet sleeves by utilizing the compatible locking means 102, 104, 103, 105, 107, 109 presented in figure 2.

By utilizing the interlocking inlet sleeves according to the invention the nailing need in fastening the inlet sleeve in cast-in-place process to mould plywood is much less than the nailing need in the prior art embodiment. The nails are fastened to the mould plywood, which is detached from the wall structure after the cast-in-place process, because hardened concrete has fastened the inlet sleeves to the wall structure, which inlet sleeves has the interlocking according to the invention. The integrated building module, which is formed by utilizing the locking structures according to the invention, the nailing is performed for example through only two nail holes 114, 116, whereas the inlet sleeves according to the prior art have to be nailed through nail holes in each four corners of the inlet sleeves to fasten the inlet sleeves to the mould plywood.

In different embodiments of the invention horizontal and vertical directions can be also determined otherwise than above is determined (related to inlet opening 100). The horizontal and vertical directions of lockings mean in practice substantial perpendicular directions between the lockings.

Although the invention has been presented in reference to the attached figures and specification, the invention is by no means limited to those, as the invention is subject to variations within the scope allowed for by the claims.

## Claims

1. Inlet sleeve arrangement for constructing a structure in a cast-in-place process by using material, which becomes harder, which inlet sleeve arrangement comprises at least two inlet sleeves comprising at least one inlet opening (100) in each inlet sleeve for inletting at least one cable through said constructed structure, **characterized by**, that the inlet sleeve arrangement comprises features of modular expandability so arranged, that at least two inlet sleeves comprises as first compatible locking means (102, 104) at least on one side of said inlet sleeves a locking protruding part (102) and at least one locking groove (104), and a distance between the locking protruding part and the locking groove is compatible to the correspondent locking means (102, 104) of the other inlet sleeve to accomplish horizontal locking between the inlet sleeves, and as second compatible locking means (103, 105, 107, 109) at least two reverse wedge-shaped protruding parts (103, 105) and locking hollows (107, 109), distance of which is compatible with corresponding compatible locking means (103, 105, 107, 109) of the other inlet sleeve to accomplish vertical locking between the inlet sleeves, and each inlet sleeve comprises at least on its one same side arranged said first locking means (102, 104) and second locking means (103, 105, 107, 109) for modular expandability of the inlet sleeve arrangement to comprise desired amount of same size or of different size of inlet sleeves by locking them fastened by said first and second locking means to form an integrated building module of the inlet sleeves for performing the cast-in-place process.

2. Inlet sleeve arrangement according to claim 1, **characterized by**, that the first inlet sleeve comprises as first compatible locking means at least one protruding locking overhang (102), which comprises a narrow lowest part (106) and as compared to the lowest part a substantially wide upper part (108), and the second inlet sleeve comprises as first compatible locking means with said locking overhang a locking groove (104), which comprises a narrow lowest part (106) and as compared to the lowest part a substantially wide upper part (108), and said locking overhang (102) is attachable into said locking groove to accomplish horizontal locking between the first and second inlet sleeve.

3. Inlet sleeve arrangement according to claim 1, **characterized by**, that the first inlet sleeve comprises as second compatible locking means at least two reverse wedge-shaped protruding part (103, 105), and the second inlet sleeve comprises locking hollows (107, 109) as second compatible locking means with said reverse wedge-shaped protruding parts (103, 105) to fasten said wedge-shaped protruding parts (103, 105) into said hollows (107, 109) to accomplish vertical locking between the first and second inlet sleeve.

4. Inlet sleeve arrangement according to claim 2, **characterized by**, that each inlet sleeve comprises on each side of them at least one locking overhang (102) and at least one locking groove (104), and the distance between them is compatible with corresponding compatible locking means (102, 104) of the other inlet sleeve to accomplish modular expandability of the inlet sleeve arrangement.

5. Inlet sleeve arrangement according to claim 3, **characterized by**, that each inlet sleeve comprises on each side of them at least two reverse wedge-shaped protruding parts (103, 105) and locking hollows (107, 109), and the distance between them is compatible with corresponding compatible locking means (103, 105, 107, 109) of the other inlet sleeve to accomplish modular expandability of the inlet sleeve arrangement.

6. Inlet sleeve arrangement according to claim 1, **characterized by**, that a building module comprising the interlocking inlet sleeves is fastened in cast-in-place process to mould plywood by nailing through at least two nail holes (114, 116) comprised by the inlet sleeves.
